Europäisches Patentamt

European Patent Office

Office européen des brevets

(19)

(11) Veröffentlichungsnummer : **0 340 584 B1**

# (12) EUROPÄISCHE PATENTSCHRIFT

(45) Veröffentlichungstag der Patentschrift :
**01.07.92 Patentblatt 92/27**

(21) Anmeldenummer : **89107348.8**

(22) Anmeldetag : **24.04.89**

(51) Int. Cl.$^5$ : **C08G 18/80,** C08G 18/10,
C08G 18/79, C07D 251/34,
C07C 271/26, C08G 18/02,
C09D 175/04

(54) **Verfahren zur Herstellung von modifizierten Polyisocyanaten.**

(30) Priorität : **05.05.88 DE 3815237**

(43) Veröffentlichungstag der Anmeldung :
**08.11.89 Patentblatt 89/45**

(45) Bekanntmachung des Hinweises auf die
Patenterteilung :
**01.07.92 Patentblatt 92/27**

(84) Benannte Vertragsstaaten :
**DE ES FR GB IT NL**

(56) Entgegenhaltungen :
**US-A- 3 023 228**

(56) Entgegenhaltungen :
**US-A- 3 428 611
CHEMICAL ABSTRACTS, Band 94, Nr. 11, Juni
1981, Seite 42, Zusammenfassung Nr.
176081g, Columbus, Ohio, US; & PL-A-107
821(ZAKLADY CHEMICZNE
"ORGANIKA-ZACHEM") 29-11-1980
"Encyclopedia of Polymer Science",vol
1,S564-565,1985,vol 3, S624,1985 USA(Wile-
y&Sons).**

(73) Patentinhaber : **BAYER AG
W-5090 Leverkusen 1 Bayerwerk (DE)**

(72) Erfinder : **Wellner, Wolfgang, Dr.
Bachstrasse 1
W-5060 Bergisch-Gladbach 2 (DE)**

**Beschreibung**

Die vorliegende Erfindung betrifft ein neues Verfahren zur Herstellung von monomerenarmen Urethan- oder Isocyanurat-modifizierten Polyisocyanaten, die im wesentlichen auf 2,4-Diisocyanatotoluol oder auf 1-Isocyanato-3,3,5-trimethyl-5-isocyanatomethyl-cyclohexan basieren durch selektive Reduzierung des Gehalts der modifizierten Polyisocyanate an diesen Monomeren durch Zugabe von Wasser.

Es ist bereits bekannt (DE-OS 2 414 413 bzw. DE-OS 2 414 391), den Gehalt von Isocyanurat- oder Urethan-modifizierten Polyisocyanaten an monomeren Ausgangsdiisocyanat durch gezielte Zugabe von einwertigen Alkoholen zu reduzieren, wobei eine Reaktion zwischen dem zugesetzten Alkohol und den zu entfernenden monomeren Ausgangsdiisocyanaten stattfindet. Dieses Verfahren ist jedoch mit dem Nachteil behaftet, daß der zugesetzte einwertige Alkohol nicht nur mit dem monomeren Ausgangsdiisocyanat sondern teilweise auch mit dem modifizierten Polyisocyanat reagiert, so daß dessen NCO-Funktionalität reduziert wird.

Überraschenderweise wurde nun gefunden, daß durch eine genau dosierte Zugabe von Wasser die Reaktion zwischen monomerem Ausgangsdiisocyanat und diesem Hilfsmittel, insbesondere im Falle von 2,4-Diisocyanatotoluol, selektiver abläuft als im Falle der Zugabe eines einwertigen Alkohols. Dies, und die Tatsache, daß Wasser eine difunktionelle Verbindung im Sinne der Isocyanat-Additionsreaktion darstellt, hat zur Folge, daß durch den Zusatz von Wasser eine weit selektivere Reduzierung des Monomerengehalts ohne Beeinträchtigung der NCO-Funktionalität der modifizierten Polyisocyanate stattfindet.

Gegenstand der Erfindung ist demzufolge ein Verfahren zur Herstellung von monomerenarmen Urethan- oder Isocyanuratgruppen aufweisenden, modifizierten Polyisocyanaten auf Basis von (i) 2,4- und gegebenenfalls 2,6-Diisocyanatoluol, (ii) Gemischen der unter (i) genannten Diisocyanate mit bis zu 80 Äquivalentprozent, bezogen auf Gemisch, an 1,6-Diisocyanatohexan oder (iii) 1-Isocyanato-3,3,5-trimethyl-5-isocyanatomethyl-cyclohexan durch Umsetzung der Ausgangsdiisocyanate mit unterschüssigen Mengen an mehrwertigen Alkoholen oder durch Trimerisierung eines Teils der Isocyanatgruppen der Ausgangsdiisocyanate, gegebenenfalls unter anschließender Entfernung der Hauptmenge von überschüssigen, nicht umgesetzten Ausgangsdiisocyanaten, so daß modifizierte Polyisocyanate vorliegen, die max. 3 Gew.-% an monomeren Ausgangsdiisocyanaten enthalten dadurch gekennzeichnet, daß man zur (weiteren) Reduzierung des Gehalts der modifizierten Polyisocyanate an 2,4-Diisocyanatotoluol oder an 1-Isocyanato-3,3,5-trimethyl-5-isocyanatomethyl-cyclohexan die modifizierten Polyisocyanate mit 0,2 - 3 Mol Wasser pro Mol an vorliegendem, nicht umgesetztem 2,4-Diisocyanatotoluol oder 1-Isocyanato-3,3,5-trimethyl-5-isocyanato-methyl-cyclohexan versetzt.

Ausgangsmaterialien für das erfindungsgemäße Verfahren sind Urethangruppen oder Isocyanuratgruppen aufweisende Polyisocyanate auf Basis von TDI (= 2,4-Diisocyanatotoluol oder dessen Gemisch mit bis zu 35 Gew.-%, bezogen auf Gemisch, an 2,6-Diisocyanatotoluol) oder IPDI (= 1-Isocyanato-3,3,5-isocyanatomethyl-cyclohexan). Hierunter sind insbesondere folgende Polyisocyanate zu verstehen:

1. Isocyanuratgruppen aufweisende Polyisocyanate auf Basis von TDI, insbesondere von 2,4-Diisocyanatotoluol oder von Gemischen von TDI mit bis zu 80 NCO-Äquivalentprozent an 1,6-Diisocyanatohexan (HDI). Diese Polyisocyanate, die beispielsweise gemäß der Lehre der US-PS 3 394 111 oder der DE-AS 1 954 093 zugänglich sind, weisen im allgemeinen, bezogen auf Feststoff, einen Gehalt an monomerem Ausgangsdiisocyanat von 0,2 bis 3,0 Gew.-% auf.

2. Urethangruppen aufweisende Polyisocyanate auf Basis von TDI und niedermolekularen, mehrwertigen Alkoholen des Molekulargewichtsbereichs 62 bis 250 wie beispielsweise Ethylenglykol, die isomeren Propandiole, die isomeren Butandiole, Trimethylolpropan, Glycerin, 1,3,6-Trihydroxyhexan oder beliebigen Gemischen derartiger mehrwertiger Alkohole. Diese als Härter für Zweikomponenten-Polyurethanlacke geeigneten, vergleichsweise niedermolekularen, Urethangruppen aufweisenden Polyisocyanate können beispielsweise gemäß der Lehre der DE-PS 1 090 196 erhalten und beispielsweise durch Dünnschichtdestillation von der Hauptmenge der vorliegenden Monomeren befreit werden. Vorzugsweise werden diese Urethangruppen aufweisenden Polyisocyanate beim erfindungsgemäßen Verfahren nach erfolgter Abtrennung der Hauptmenge der Monomeren eingesetzt, d.h., die Polyisocyanate weisen vor der Durchführung des erfindungsgemäßen Verfahrens vorzugsweise einen Gehalt an 0,3 bis 3 Gew.-%, bezogen auf die Gesamtmenge an Polyisocyanaten, an monomerem TDI auf.

3. Höhermolekulare Urethangruppen aufweisende Polyisocyanate, wie sie in an sich bekannter Weise durch Umsetzung von überschüssigen Mengen an TDI oder überschüssigen Mengen IPDI mit höhermolekularen Polyhydroxylverbindungen des Molekulargewichtsbereichs 250 bis 6000, vorzugsweise bis 1000 bis 4000, erhalten worden sind. Als höhermolekulare Polyhydroxylverbindungen kommen insbesondere die aus der Polyurethanchemie an sich bekannten Polyesterpolyole oder Polyetherpolyole einer Hydroxylfunktionalität von 2 bis 4, insbesondere von 2 bis 3, in Betracht. Diese höhermolekularen NCO-Prepolymeren können vor der Durchführung des erfindungsgemäßen Verfahrens, gegebenenfalls durch Dünnschichtdestillation, von der Hauptmenge der Monomeren befreit werden. Im allgemeinen liegt der Gehalt an monomeren Ausgangsdiisocyanat in diesen NCO-Prepolymeren vor der Durchführung des erfindungsgemäßen Verfahrens bei 0,3 bis 3 Gew.-%.

Das erfindungsgemäße Verfahren dient insbesondere zur weiteren Reduzierung des Gehalts der modifizierten Polyisocyanate an TDI, insbesondere an 2,4-Diisocyanatotoluol bzw. an IPDI. Die Ausgangspolyisocyanate werden beim erfindungsgemäßen Verfahren entweder in Substanz oder in Form von Lösungen in geeigneten inerten Lösungsmitteln, insbesondere in den üblichen inerten Lacklösungsmitteln, eingesetzt. Geeignete Lösungsmittel sind beispielsweise Ethylacetat, Butylacetat, Methylethylketon, Methylisobutylketon, Ethylenglykol-monoethylether-acetat, Methoxypropylacetat, Toluol, Xylol, Testbenzin oder beliebige Gemische derartiger Lösungsmittel. Hydrophile Lösungsmittel der beispielhaft genannten Art können auch als Träger für das als Modifizierungsmittel verwendete Wasser dienen.

Die Frage, ob die Ausgangspolyisocyanate in Substanz oder in Form von Lösungen verwendet werden, hängt selbstverständlich auch von der Konsistenz der Ausgangspolyisocyanate ab. Ausgangspolyisocyanate, die unter den Bedingungen des erfindungsgemäßen Verfahrens Festsubstanzen oder hochviskose Flüssigkeiten darstellen, wird man im allgemeinen in gelöster Form verwenden.

Das erfindungsgemäße Verfahren wird vorzugsweise bei Raumtemperatur durch Einrühren der erforderlichen Wassermenge in das Ausgangspolyisocyanat bzw. seine Lösung durchgeführt. Die erfindungswesentliche Umsetzung besteht in der weitgehend selektiven Reaktion des im Ausgangspolyisocyanat vorliegenden monomeren TDI insbesondere 2,4-Diisocyanatotoluols bzw. IPDI. Das Wasser wird bei der Durchführung des erfindungsgemäßen Verfahrens im allgemeinen in einer Menge von 0,2 bis 3 und insbesondere 0,3 bis 1,0 Mol pro Mol an freiem TDI oder IPDI verwendet. Für eine möglichst quantitative Entfernung der monomeren Ausgangsdiisocyanate ist selbstverständlich eine mindestens äquivalente Menge an Wasser, d.h., die Verwendung von 0,5 Mol Wasser pro Mol Diisocyanat, erforderlich.

Das erfindungsgemäße Verfahren kann auch unter Mitverwendung von Hilfsstoffen, insbesondere von Katalysatoren für die Modifizierungsreaktion (Harnstoffbildung), durchgeführt werden. Geeignete Katalysatoren sind beispielsweise N,N-Dimethylbenzylamin, Zinnoctoat oder Dibutylzinnoctoat.

Die Zugabe des Wassers kann in Substanz oder, wie bereits ausgeführt, in Form einer Lösung in einem geeigneten Lösungsmittel erfolgen.

Die erfindungsgemäßen Verfahrensprodukte stellen wertvolle Bindemittel für Ein- oder Zweikomponenten-Polyurethanlacke dar. Bei dieser erfindungsgemäßen Verwendung der erfindungsgemäßen Verfahrensprodukte gelangen diese entsprechend den bekannten Verfahren der Beschichtungstechnologie zum Einsatz.

In den nachfolgenden Beispielen beziehen sich alle Prozentangaben auf Gewichtsprozente.

## Beispiel 1

In ein NCO-Prepolymer mit einem NCO-Gehalt von 4,2 %, einem Monomeren-Gehalt von 2,7 % und einer Viskosität bei 23°C von 8.400 mPa.s, welches bei 70°C durch Umsetzung von IPDI mit Polypropylenglykol der OH-Zahl 56 in Gegenwart von 0,1 %, bezogen auf das Gewicht der Ausgangsmaterialien, Dibutylzinndilaurat hergestellt worden ist, werden in zwei Parallelversuchen 0,07 % (Molverhältnis Monomer:Wasser = 1:0,32) bzw. 0,14 % (Molverhältnis = 1:0,64) Wasser eingerührt. Nach einer Verweildauer von 3 Tagen bei 23°C werden die nachstehenden Kennzahlen ermittelt:

| Molverhältnis Monomer:$H_2O$ | 1:0 | 1:0,32 | 1:0,64 |
|---|---|---|---|
| Monomergehalt % | 2,7 | 2,1 | 1,3 |
| NCO-Gehalt % | 4,2 | 3,9 | 3,5 |
| Viskosität mPa.s/23°C | 8400 | 10200 | 16000 |

## Beispiel 2

In ein NCO-Prepolymer mit einem NCO-Gehalt von 3,8 %, einem Monomer-Gehalt von 1,1 % und einer Viskosität bei 23°C von 6600 mPa.s, welches durch Umsetzung von 2,4-Diisocyanatotoluol mit Polypropylenglykol der OH-Zahl 56 bei 70°C unter Verwendung von 0,1 % Zinnoctoat als Katalysator hergestellt worden ist, werden in zwei Parallelversuchen 0,025 % (Molverhältnis = 1:0,23) bzw. 0,05 % (Molverhältnis = 1:0,46) Wasser in Form einer 3 %igen Lösung in Ethylacetat eingerührt. Nach Einrühren der Wassermenge und einer Verweilzeit von 3 Tagen bei 23°C werden die nachstehenden Kenndaten ermittelt.

| Molverhältnis Monomer:$H_2O$ | 1:0 | 1:0,23 | 1:0,46 |
|---|---|---|---|
| Monomergehalt % | 1,1 | 0,6 | 0,1 |
| NCO-Gehalt % | 3,8 | 3,6 | 3,4 |
| Viskosität mPa.s/23° C | 6600 | 5800 | 5300 |

Dieses Beispiel zeigt besonders anschaulich die erfindungsgemäß eröffnete Möglichkeit, den Gehalt des modifizierten Isocyanats an monomerem 2,4-Diisocyanatotoluol selektiv zu reduzieren.

Beispiel 3

In ein 75 %ig in Ethylacetat gelöstes Polyisocyanat-Addukt mit einem NCO-Gehalt von 12,8 %, einem Monomer-Gehalt von 0,3 % und einer Viskosität bei 23°C von 1600 mPa.s, welches durch Umsetzung eines Isomerengemisches aus 65 % 2,4-Diisocyanatotoluol und 35 % 2,6-Diisocyanatotoluol mit Trimethylolpropan hergestellt wurde und durch nachfolgende Dünnschichtdestillation weitgehend von der Hauptmenge der Monomeren befreit wurde, werden 0,09 % (Molverhältnis TDI:Wasser = 1:2,9) Wasser in Form einer 3 %igen Lösung in Ethylacetat eingerührt. Nach Lagerung bei 23°C werden in Abhängigkeit von der Zeit die nachfolgenden Kenndaten ermittelt (alle Zahlenangaben beziehen sich auf die Lösung).

| Verweildauer in Tagen | 0 | 7 | 14 | 28 |
|---|---|---|---|---|
| Monomergehalt % | 0,30 | 0,24 | 0,17 | 0,14 |
| NCO-Gehalt % | 12,6 | 12,2 | 12,0 | 12,0 |
| Viskosität mPa.s/23° C | 835 | 1340 | 1350 | 1530 |

Beispiel 4

Dieses Beispiel zeigt, daß die Verwendung von Wasser zur Reduzierung des Monomerengehalts effektiver ist als die Verwendung von alkoholischen Modifizierungsmitteln.

In drei Parallelversuchen werden in das NCO-Prepolymere gemäß Beispiel 2 (Monomerengehalt = 1,1 %) 0,025 % Wasser (Molverhältnis = 1:0,23) bzw. 0,086 % Ethylenglykol (Molverhältnis = 1:0,23) bzw. 0,17 % Isopropanol (Molverhältnis = 1:0,46) eingerührt und nach einer Verweildauer von 3 Tagen bei 23°C werden die nachfolgenden Kenndaten ermittelt.

| Äquivalente Mengen | Ethylenglykol | Isopropanol | Wasser |
|---|---|---|---|
| Monomergehalt % | 0,9 | 0,9 | 0,6 |
| NCO-Gehalt % | 3,6 | 3,6 | 3,6 |
| Viskosität mPa.s/23° C | 7200 | 6700 | 7700 |

**Patentansprüche**

1. Verfahren zu Herstellung von monomerenarmen Urethan- oder Isocyanuratgruppen aufweisenden, modifizierten Polyisocyanaten auf Basis von (i) 2,4- und gegebenenfalls 2,6-Diisocyanatotoluol, (ii) Gemischen der unter (i) genannten Diisocyanate mit bis zu 80 Äquivalentprozent, bezogen auf Gemisch, an 1,6-Diisocyanatohexan oder (iii) 1-Isocyanato-3,3,5-trimethyl-5-isocyanatomethyl-cyclohexan durch Umsetzung der Ausgangsdiisocyanate mit unterschüssigen Mengen an mehrwertigen Alkoholen oder durch Trimerisierung eines Teils der Isocyanatgruppen der Ausgangsdiisocyanate, gegebenenfalls unter anschließender Entfernung der Hauptmenge von überschüssigen, nicht umgesetzten Ausgangsdiisocyanaten, so daß modifizierte Polyisocyanate vorliegen, die max. 3 Gew.-% an monomeren Ausgangsdiisocyanaten enthalten, dadurch gekennzeichnet, daß man zur (weiteren) Reduzierung des Gehalts der modifizierten Polyisocyanate an 2,4-Diisocyanatotoluol oder an 1-Isocyanato-3,3,5-trimethyl-5-isocyanatomethyl-cyclohexan die modifizierten Polyisocyanate mit 0,2 - 3 Mol Wasser pro Mol an vorliegendem, nicht umgesetztem 2,4-Diisocyanatotoluol oder 1-Isocyanato-3,3,5-trimethyl-5-isocyanato-methyl-cyclohexan versetzt.

2. Verfahren gemäß Anspruch 1, dadurch gekennzeichnet, daß die Umsetzungen in Gegenwart von inerten Lösungsmitteln durchgeführt werden.

## Revendications

1. Procédé de production de polyisocyanates modifiés, porteurs de groupes uréthanne ou isocyanurate, pauvres en monomères, à base (i) de 2,4- et le cas échéant de 2,6-diisocyanatotoluène, (ii) de mélanges des diisocyanates mentionnés en (i) avec jusqu'à 80% d'équivalents, par rapport au mélange, de 1,6-diisocyanatohexane ou (iii) de 1-isocyanato-3,3,5-triméthyl-5-isocyanatométhyl-cyclohexane, par réaction des diisocyanates de départ avec des quantités déficitaires d'alcools polyvalents ou par trimérisation d'une partie des groupes isocyanato des diisocyanates de départ, le cas échéant suivie de l'élimination de la majeure partie des diisocyanates de départ en excès n'ayant pas réagi, de manière à obtenir des polyisocyanates modifiés qui contiennent au maximum 3% en poids de diisocyanates monomères de départ, caractérisé en ce que pour réduire (davantage) la teneur des polyisocyanates modifiés en 2,4-diisocyanatotoluène ou en 1-isocyanato-3,3,5-triméthyl-5-isocyanatométhyl-cyclohexane, on ajoute aux polyisocyanates modifiés 0,2 à 3 moles d'eau par mole de 2,4-diisocyanatotoluène ou de 1-isocyanato-3,3,5-triméthyl-5-isocyanatométhyl-cyclohexane présent n'ayant pas réagi.

2. Procédé suivant la revendication 1, caractérisé en ce que les réactions sont conduites en présence de solvants inertes.

## Claims

1. A process for the production of low-monomer urethane or isocyanurate-modified polyisocyanates based on (i) 2,4-and, optionally, 2,6-diisocyanatotoluene, (ii) mixtures of the diisocyanates mentioned under (i) with up to 80 equivalent percent, based on mixture, of 1,6-diisocyanatohexane or (iii) 1-isocyanato-3,3,5-trimethyl-5-isocyanatomethyl cyclohexane by reaction of the starting diisocyanates with less than equivalent quantities of polyhydric alcohols or by partial trimerization of the isocyanate groups of the starting diisocyanates, optionally with subsequent removal of most of the excess unreacted starting diisocyanates, so that modified polyisocyanates containing at most 3% by weight monomeric starting diisocyanates are present, characterized in that, in order (further) to reduce the 2,4-diisocyanatotoluene or 1-isocyanato-3,3,5-trimethyl-5-isocyanatomethyl cyclohexane content of the modified polyisocyanates, 0.2 to 3 mol water per mol unreacted 2,4-diisocyanatotoluene or 1-isocyanato-3,3,5-trimethyl-5-isocyanatomethyl cyclohexane present is added to the modified polyisocyanates.

2. A process as claimed in claim 1, characterized in that the reactions are carried out in the presence of inert solvents.